# EUROPÄISCHE PATENTSCHRIFT

(11) **EP 2 184 823 B1**
(45) Veröffentlichungstag und Bekanntmachung des Hinweises auf die Patenterteilung: **29.09.2010**
(21) Anmeldenummer: 08168815.2
(22) Anmeldetag: 11.11.2008
(51) Int. Cl.: H02G 3/32

(54) **Deckenstütze**
Ceiling strut
Support pour plafond

(43) Veröffentlichungstag der Anmeldung: 12.05.2010
(73) Patentinhaber: ZURECON AG, 8003 Zürich (CH)
(72) Erfinder: Pfluger, Gerd, CH-4625, Oberbuchsiten (CH)
(74) Vertreter: Rutz & Partner

(56) Entgegenhaltungen:
- EP-A- 0 732 788
- EP-A- 1 962 400
- DE-U1- 8 814 025

## Beschreibung

Die Erfindung betrifft eine der Montage insbesondere von Kabelführungsvorrichtungen dienende Deckenstütze nach dem Oberbegriff des Patentanspruchs 1.

In Gewerbe-, Industrie- und Verwaltungsgebäuden werden Kabel für Stark- und Schwachstromnetze infolge fehlender Eigenstabilität, im Gegensatz zu Rohren, in kanalartige Vorrichtungen wie Kabelbahnen, Gitterbahnen gelegt, und so beispielsweise von einem Schaltfeld zu den Verbrauchern geführt. Kabelführungsvorrichtungen dieser Art sind beispielsweise aus [1], Produktkatalog der LANZ OENSINGEN AG, April 2003, bekannt.

Das der Montage an Decken dienende Trägermaterial für Kabelführungsvorrichtungen besteht normalerweise aus einer sogenannten Deckenstütze, mit der ein Ausleger (Konsole) verbindbar ist. Auf den mit der Deckenstütze verbundenen Ausleger werden die Kabelführungsvorrichtungen abgelegt, wie dies in [1] gezeigt ist.

Die aus [1] bekannte, normalerweise aus verzinktem oder rostfreiem Stahl bestehende Deckenstütze weist ein Endstück bzw. eine Kopfplatte auf, die mit einem meist gelochten, stab- oder rohrförmigen Profilteil verschweisst oder verschraubt ist. Diese Kopfplatte wird mittels Montageschrauben bzw. Metalldübel, auch Segmentanker genannt, mit der Decke verbunden. Die in die Decke eingesenkten Segmentanker sind dabei in der Lage, grössere Lasten zu tragen.

Nach der Montage der Deckenstütze kann der Ausleger auf passender Höhe mit einer Seitenwand des in der Regel U- oder C-förmigen Profilteils verschraubt, oder darin eingehängt werden.

Aufgrund der schweren Lasten sind Deckenstützen dieser Art hohen Belastungen ausgesetzt, weshalb entsprechend gross dimensionierte Vorrichtungen aus verhältnismässig dickem Stahlblech eingesetzt werden. Metallene Deckenstützen der genannten Art weisen typischerweise ein hohes Gewicht auf.

Um die Deckenstützen an der Decke stabil zu montieren, werden sie jeweils mit einer oder mehreren, entsprechend dimensionierten Segmentankern an der Decke befestigt. Zur Montage der Deckenstütze besteigt der Handwerker normalerweise eine Leiter, wonach die Deckenstütze mit einer Hand gehalten wird. Mit der anderen Hand muss der Handwerker eine Schraubenmutter auf die mindestens einen Segmentanker aufsetzen und sicherheitshalber einige Umdrehungen hochschrauben, um die Deckenstütze derart provisorisch zu montieren bzw. zu fixieren. Aufgrund des relativ hohen Gewichts der zu haltenden Deckenstütze, der oft unvorteilhaften Position des Handwerkers auf der Leiter, der auf Baustellen oft schlechten Beleuchtung und der oft grossen Kälte, welche zu klammen Fingern führt, ist diese Montage mit erheblichen Problemen, insbesondere Sicherheitsproblemen, verbunden. Aufgetreten sind Handverletzungen bei der beschriebenen Manipulation mit Deckenstützen, Verletzungen durch seitliches Ausschlagen oder Herunterfallen der Deckenstütze. Normalerweise ist auch der Handwerker auf der Leiter jeweils ungesichert.

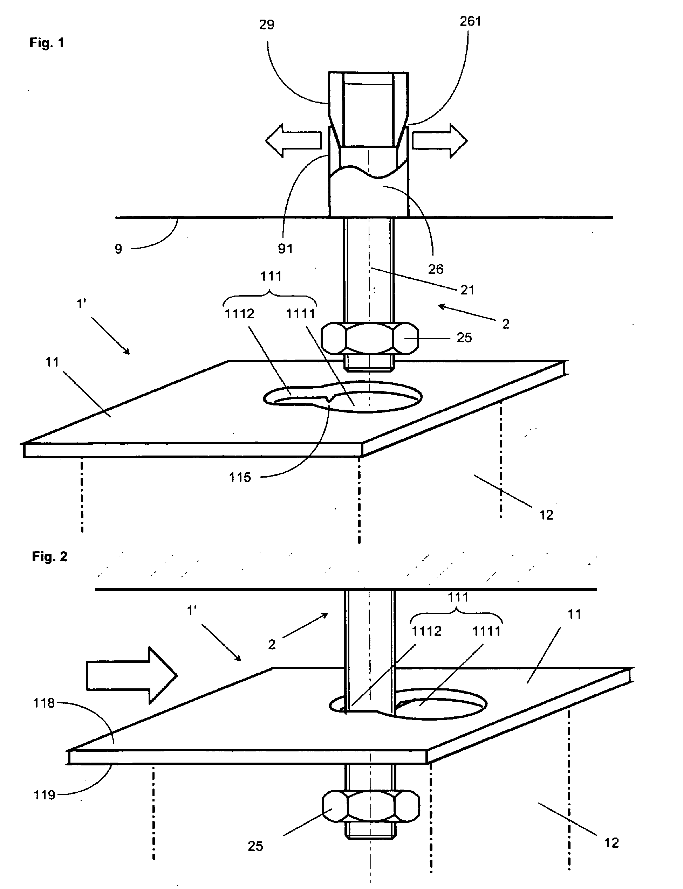

Aus [2], EP 1 962 401 A2 ist die in den Figuren 1 und 2 gezeigte Deckenstütze 1' bekannt, die einen Stützenkörper 12 in der Form eines Rechteckprofils aufweist, der oben mit einem plattenförmigen Endstück 11 bzw. einer Kopfplatte versehen ist. Weiter zeigt Figur 1 einen Dübel oder Segmentanker 2, der in einer Bohrung 91 in einer Decke 9 befestigtet ist. Segmentanker dieser Art sind beispielsweise aus [3], DE 197 56 997 A1 bekannt. Der gezeigte Segmentanker 2 weist ein von einer Gewindestange 21 gehaltenes Kopfstück 29 auf, das gegen das Endstück 261 einer Hülse 26 gezogen wird und dieses radial nach aussen drückt, wodurch der Segmentanker 2 in der Bohrung 91 verankert wird. Auf der Unterseite ist die Gewindestange 21 mit einer Schraubenmutter 25 versehen.

Im Endstück 11 der Deckenstütze 1' ist eine Aufnahmeöffnung 111 vorgesehenen, die der Aufnahme der mit der Schraubenmutter 25 versehenen Gewindestange 21 dient. Die Aufnahmeöffnung 111 weist ein grösseres erstes und ein kleineres zweites Öffnungsteil 1111 bzw. 1112 auf. Das grössere erste Öffnungsteil 1111 ist derart dimensioniert, dass die Gewindestange 21 und das daran befestigte Verbindungselement bzw. die Schraubenmutter 25 hindurch führbar sind. Das kleinere zweite Öffnungsteil 1112 ist derart dimensioniert, dass die Gewindestange 21 mit geringem Spiel darin einschiebbar ist, wenn die Deckenstütze 1' seitlich entsprechend verschoben wird. Der Durchmesser der Schraubenmutter 25 ist ferner wesentlich grösser gewählt, als der Durchmesser des zweiten Öffnungsteils 1112. Der an das zweite Öffnungsteil 1112 angrenzende Rand 112, der Teil des Endstücks 11 ist, dient daher als Flansch, der die Schraubenmutter 25 hält, sobald diese an der Unterseite 119 des Endstücks 11 unter das zweite Öffnungsteil 1112 geschoben wird. Die in Figur 2 gezeigte Deckenstütze 1' kann daher auf die Schraubenmutter 25 abgesenkt werden und wird unterhalb des kleineren zweiten Öffnungsteils 111B gehalten.

Damit das Verbindungselement bzw. die Schraubenmutter 25 gehalten bleibt und sich nicht selbsttätig zum grösseren ersten Öffnungsteil 1111 hin verschieben kann, wird im Bereich des Übergangs zwischen dem ersten und dem zweiten Öffnungsteil 1111, 1112 beispielsweise ein Hindernis, wie ein hervorstehendes Randelement 11 oder ein Widerhaken vorgesehen, welches als Anschlag für die Schraubenmutter 25 dient. Damit ist jedoch noch nicht sichergestellt, dass sich diese bekannte Deckenstütze 1' auch unter Krafteinwirkung, beispielsweise bei einer Fehlmanipulation des Installateurs, nicht von der Gewindestange löst. Durch die Verwendung von zwei oder mehreren Gewindestangen, die in gleicher Weise montiert werden, kann dieses Risiko lediglich reduziert, praktisch jedoch nicht ausgeschlossen werden.

Der vorliegenden Erfindung liegt daher die Aufgabe zugrunde, eine weiter verbesserte Deckenstütze zu schaffen, die mittels wenigstens zwei in einer Decke verankerten Montageelementen, wie Gewindestangen, montiert wird.

Insbesondere ist eine Deckenstütze zu schaffen, die unabhängig von einem gegebenenfalls hohen Gewicht und gegebenenfalls grösseren Abmessungen, ohne Sicherheitsrisiken einfach und rasch montierbar ist und die sich nach der provisorischen Verbindung mit den in der Decke verankerten Gewindestangen auch unter Krafteinwirkung nicht mehr selbsttätig von diesen lösen kann.

Diese Aufgabe wird mit einer Deckenstütze gelöst, welche die in Anspruch 1 angegebenen Merkmale aufweist. Vorteilhafte Ausgestaltungen der Erfindung sind in weiteren Ansprüchen angegeben.

Die Deckenstütze, die insbesondere der Montage einer Kabelführungsvorrichtung dient, weist ein vorzugsweise plattenförmiges Endstück und einen daran anschliessenden Stützenkörper auf, der mit einem Ausleger verbindbar ist, auf den die zu tragende Last abgelegt werden kann. Dabei ist das Endstück mit wenigstens mit einer ersten und einer zweiten Gewindestange verbindbar, die in der Decke verankert sind.

Erfindungsgemässe ist das Endstück mit wenigstens zwei Aufnahmeöffnungen versehen, die je ein grösseres erstes Öffnungsteil aufweisen, in die ein an der ersten bzw. zweiten Gewindestange drehbar gelagertes Verbindungselement einführbar ist, und die ein kleineres zum Halten des Verbindungselements geeignetes zweites Öffnungsteil aufweisen, in das die eingeführte Gewindestange verschiebbar ist, wobei der Abstand zwischen den ersten Öffnungsteilen grösser gewählt ist, als der Abstand zwischen den Gewindestangen.

Die erfindungsgemässe Deckenstütze kann daher mit wenigen Handgriffen mit der ersten und der zweiten Gewindestange verbunden werden, wobei ein späteres selbsttätiges Lösen der Deckenstütze von den Gewindestangen auch unter Krafteinwirkung praktisch vermieden wird.

Dazu werden die Verbindungselemente, beispielsweise Schraubenmuttern, auf die in der Decke verankerten Gewindestangen aufgesetzt. Anschliessend wird die erste Gewindestange mit dem aufgesetzten Verbindungselement durch das erste Öffnungsteil der ersten Aufnahmeöffnung hindurchgeführt und soweit in das zweite Öffnungsteil der ersten Aufnahmeöffnung hinein verschoben, bis die zweite Gewindestange mit dem aufgesetzten Verbindungselement in das erste Öffnungsteil der zweiten Aufnahmeöffnung eingeführt und in das zweite Öffnungsteil der zweiten Aufnahmeöffnung verschoben werden kann. Nach Abschluss dieses Vorgangs ist verhindert, dass sich die Deckenstütze durch einfaches Verschieben von den Gewindestangen lösen kann.

Nachdem die Deckenstütze mit den Gewindestangen, beispielsweise von in der Decke verankerten Dübeln oder Segmentankern, verbunden wurde, werden die Verbindungselemente bzw. Schraubenmuttern festgezogen.

Die Deckenstütze wird in der Folge von zwei Gewindestangen stabil gehalten und zum Tragen grösserer Lasten geeignet.

Trotz der Verwendung von zwei Gewindestangen bzw. Segmentankern kann der Montagevorgang in zwei Arbeitsschritte unterteilt werden, die vom Handwerker unabhängig voneinander vollzogen werden können. Der Handwerker kann eine erfindungsgemässe Deckenstütze im ersten Arbeitsschritt mit den in der Decke vorhandenen Segmentankern formschlüssig und damit absolut absturzsicher verbinden, ohne dass Werkzeug oder Befestigungsmittel benötigt werden. Es ist lediglich erforderlich, dass die Gewindestangen sequenziell in die Aufnahmeöffnungen eingeführt werden, was durch Verschiebung und/oder Drehung möglich ist. Im zweiten Arbeitsschritt kann die Deckenstütze, ohne dass diese selbst gehalten werden muss, durch Festdrehen der Verbindungselemente, gegebenenfalls der Schraubenmutter, fixiert werden.

Da der Abstand zwischen den ersten Öffnungsteilen grösser gewählt ist, als der Abstand zwischen den Gewindestangen, ist es praktisch ausgeschlossen, dass sich die Deckenstütze von den Gewindestangen wieder lösen kann. Unter Berücksichtigung der genannten Bedingung können die Aufnahmeöffnungen unterschiedlich ausgestaltet und ausgerichtet sein.

Die zweiten Öffnungsteile der beiden Aufnahmeöffnungen verlaufen in einer ersten vorzugsweisen Ausgestaltung senkrecht oder schräg zueinander. Zur Montage der Deckenstütze sind dabei Verschiebungen in zwei Richtungen notwendig, wodurch ein selbsttätiges Lösen weiter erschwert wird. Zuerst wird die erste Gewindestange in das erste Öffnungsteil der ersten Aufnahmeöffnung eingeführt und in das zweite Öffnungsteil hinein verschoben, bis die zweite Gewindestange in das erste Öffnungsteil der zweiten Aufnahmeöffnung eingeführt und in das dortige zweite Öffnungsteil hinein verschoben werden kann.

Damit die erste Gewindestange, während des Verschiebens der zweiten Gewindestange in das zweite Öffnungsteil hinein, stationär an einer Montageposition in der ersten Aufnahmeöffnung gehalten bleibt, verläuft das zweite Öffnungsteil der zweiten Aufnahmeöffnung vorzugsweise entlang der Linie eines Kreises, dessen Mittelpunkt durch die Montageposition der ersten Gewindestange gebildet wird. Bei dieser Ausgestaltung kann die erste Gewindestange daher in eine Endposition verschoben und dort stationär gehalten werden, während die zweite Gewindestange, durch Drehung der Deckenstütze, in deren Endposition verschoben wird.

In einer zweiten vorzugsweisen Ausgestaltung verlaufen die zweiten Öffnungsteile der beiden Aufnahmeöffnungen in einem Abstand parallel zueinander, der vorzugsweise dem Abstand zwischen den beiden Gewindestangen entspricht. Bei dieser Ausgestaltung wird die erste Gewindestange in das erste Öffnungsteil der ersten Aufnahmeöffnung eingeführt und so weit in das zweite Öffnungsteil eingeführt, bis die zweite Gewindestange in das erste Öffnungsteil der ersten Aufnahmeöffnung eingeführt und in das zweite Öffnungsteil verschoben werden kann. Beim Einschieben der zweiten Gewindestange in das zweite Öffnungsteil bis zu einer End- bzw. Montageposition wird die erste Gewindestange im zweiten Öffnungsteil der ersten Aufnahmeöffnung ebenfalls bis zu einer Montageposition zurück verschoben. Bei dieser Ausgestaltung gelingt die Montage der Deckenstütze daher durch ein lineares Vor- und Zurückverschieben der Deckenstütze, das einfach ausgeführt werden kann. Hingegen ist auch hier praktisch ausgeschlossen, dass sich die Deckenstütze selbsttätig lösen kann, weil wiederum wenigstens ein Vor- und Zurückverschieben der Deckenstütze erforderlich ist.

In weiteren vorzugsweisen Ausgestaltungen kann vorgesehen werden, dass das zweite Öffnungsteil der ersten und/oder zweiten Aufnahmeöffnung einen verwinkelten Verlauf aufweist. Dadurch können eine zusätzliche Sicherung sowie eine vorteilhaftere Anordnung der Montageposition erzielt werden. Ein selbsttätiges Lösen aus den verwinkelten verlaufenden Öffnungsteilen ist praktisch ausgeschlossen. Durch den Installateur kann die Deckenstütze hingegen mit nur geringem Kraftaufwand wieder gelöst werden.

Vorzugsweise werden die Aufnahmeöffnungen derart angeordnet, dass sich die Verläufe der beiden zweiten Öffnungsteile ausgehend von den ersten Öffnungsteilen zumindest zu Beginn stetig annähern. Die beiden Aufnahmeöffnungen weisen daher vorzugsweise im Bereich der ersten Öffnungsteile einen maximalen Abstand voneinander auf. Die ersten Öffnungsteile können daher peripher vorgesehen werden, während die im Bereich der zweiten Öffnungsteile liegenden Montagepositionen an gewünschten Stellen vorgesehen werden können.

Die zweiten Öffnungsteile der Aufnahmeöffnungen sind vorzugsweise derart dimensioniert, dass die Gewindestangen seitlich einschiebbar und spielfrei gehalten sind. Der an jedes zweite Öffnungsteil angrenzende Rand, der Teil des Endstücks ist, dient dabei als Flansch zum Halten des Verbindungselements bzw. der Schraubenmutter.

Die in die Montageposition verschobene Verbindungselemente, gegebenenfalls die Schraubenmuttern, können in den Montagepositionen auf verschiedene Arten fixiert und/oder gesichert werden. In die an die zweiten Öffnungsteile angrenzenden Ränder ist vorzugsweise je ein Sitz eingearbeitet, der als Montageposition und dem Halten des Verbindungselements dient. Zusätzlich oder alternativ können auch Widerhaken vorgesehen sein, mittels derer die Verbindungselemente in der Montageposition gehalten werden.

Nachfolgend wird die Erfindung anhand von Zeichnungen beispielsweise näher erläutert. Dabei zeigt:
- Fig. 1: die eingangs beschriebene bekannte Deckenstütze 1' sowie einen in einer Decke 9 befestigten Segmentanker 2;
- Fig. 2: die Deckenstütze 1 von Figur 1 während der Montage;
- Fig. 3: eine Schnittdarstellung einer erfindungsgemässen Deckenstütze 1, deren plattenförmiges Endstück 11 zwei der Aufnahme von zwei Gewindestangen 21A, 21B dienende, Aufnahmeöffnungen 111A, 111B aufweist, die senkrecht zueinander ausgerichtet sind;
- Fig. 4: die Deckenstütze 1 von Figur 3 mit einer vorzugsweise ausgestalteten zweiten Aufnahmeöffnung 111B; und
- Fig. 5a-b: Schnittdarstellungen einer erfindungsgemässen Deckenstütze 1, deren Endstück 11 zwei der Aufnahme von zwei Gewindestangen 21A, 21B dienende Aufnahmeöffnungen 111A, 111B aufweist, die parallel zueinander ausgerichtet sind.

Die Figuren 1 und 2 zeigen eine bekannte Deckenstütze 1', die eingangs beschrieben wurde.

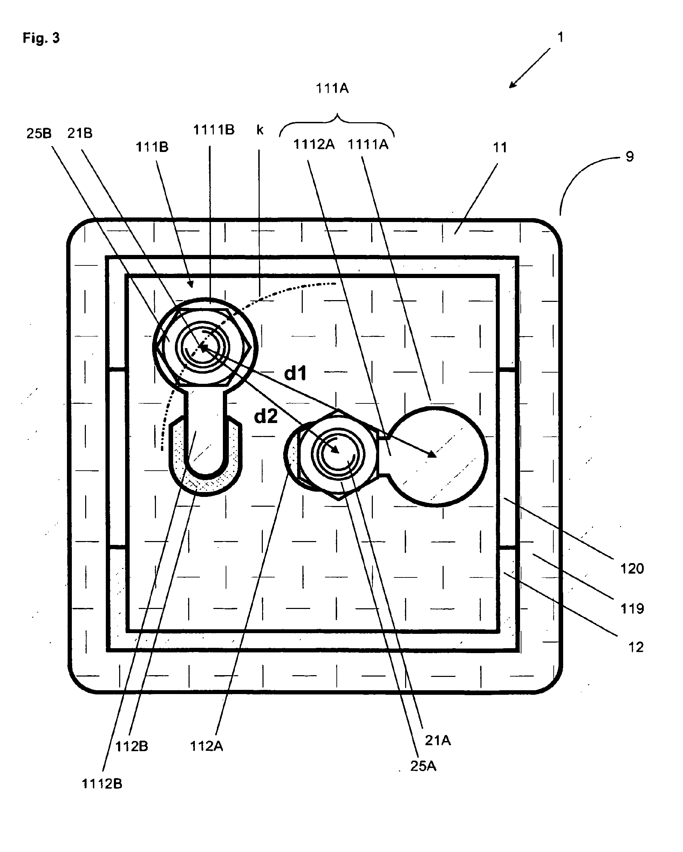

Figur 3 zeigt eine Schnittdarstellung einer erfindungsgemässen Deckenstütze 1, deren plattenförmiges Endstück 11 zwei der Aufnahme von zwei Gewindestangen 21A, 21B dienende Aufnahmeöffnungen 111A, 111B aufweist, die je ein erstes Öffnungsteil 1111A bzw. 1111B sowie ein daran anschliessendes zweites Öffnungsteil 1112A bzw. 1112B aufweisen. Die Aufnahmeöffnungen 111A, 111B erfindungsgemässer Deckenstütze 1 weisen daher vorzugsweise die Form eines Schlüssellochs auf, wobei das zweite Öffnungsteil 1112A bzw. 1112B, das dem Bart des virtuellen Schlüssels entspricht, verschiedene vorzugsweise Verläufe aufweisen kann. Gezeigt sind ferner zwei in der Decke 9 verankerte Gewindestangen 21A, 21B mit darauf aufgesetzten Montageschrauben 25A, 25B, deren Abstand d2 wesentlich kleiner ist, als der Abstand d1 zwischen den ersten Öffnungsteilen 1111A, 1111B der beiden Aufnahmeöffnungen 111A, 111B. Es ist daher nicht möglich, die beiden Gewindestangen 21A, 21B simultan in die zugehörigen ersten Öffnungsteile 111A, 111B einzuführen.

In Figur 3 ist gezeigt, dass zuerst die erste Gewindestange 21A mit der ersten Schraubenmutter 25A durch das erste Öffnungsteil 1111A in die erste Aufnahmeöffnung 111A eingeführt und darin in das zweite Öffnungsteil 1112A soweit verschoben wurde, bis die zweite Gewindestange 21B über dem ersten Öffnungsteil 1111B der zweiten Aufnahmeöffnung B steht. In dieser in Figur 3 gezeigten Position wird die mit der zweiten Schraubenmutter 25B versehene zweite Gewindestange 21B in das erste Öffnungsteil 1111B der zweiten Aufnahmeöffnung 111B eingeführt und in das zweite Öffnungsteil 1112B verschoben. Damit die erste Gewindestange 25A sicher im zweiten Öffnungsteil 1112A der ersten Aufnahmeöffnung 111A gehalten bleibt, sind die zweiten Öffnungsteile 1112A, 1112B senkrecht zueinander ausgerichtet. Solange die zweite Gewindestange 21B im zweiten Öffnungsteil 1112B der zweiten Aufnahmeöffnung 111B verweilt, kann die mit der ersten Schraubenmutter 25 versehene erste Gewindestange 21A nicht mehr aus der ersten Aufnahmeöffnung 111A gelöst werden.

Um die Schraubenmuttern 25A, 25B in den Montagepositionen weiter zu sichern, weisen die zweiten Öffnungsteile 1112A, 1112B je einen Sitz 112A, 112B auf, die vorzugsweise in Form einer an die Schraubenmuttern 25A, 25B angepassten Ausnehmung in die Unterseite 119 des Endstücks 11 eingearbeitet sind. Durch das Eigengewicht der Deckenstütze 1 werden die Schraubenmuttern 25A, 25B daher in den Sitz 112A bzw. 112B hinein gedrückt und von diesem gehalten. Eine selbsttätige Verschiebung der Deckenstütze 1 wird durch diese Massnahme daher weiter verhindert.

Vorzugsweise ist jeder Sitz 112A, 112B als kragenförmiger Rand ausgebildet, der in das Endstück 11 derart eingeprägt oder eingefräst ist, dass er die zugehörige Schraubenmutter 25A, 25B nahe umschliesst und soweit hält, dass diese nur mittels eines Werkzeugs gedreht werden kann.

Figur 3 kann weiter entnommen werden, dass sich die erste Gewindestange 21A im zweiten Öffnungsteil 1112A der ersten Aufnahmeöffnung 111A verschiebt, sobald die zweite Gewindestange 21B in das zweite Öffnungsteil 1112B der zweiten Aufnahmeöffnung 111B eingeschoben wird. Damit die erste Gewindestange 21A jedoch in einer festgelegten Montageposition im zweiten Öffnungsteil 1112A gehalten bleibt, wird das zweite Öffnungsteil 1112B der zweiten Aufnahmeöffnung 111B vorzugsweise entlang der Linie k eines Kreises ausgerichtet, dessen Mittelpunkt an der Montageposition der ersten Gewindestange 21A liegt. Das zweite Öffnungsteil 1112A der ersten Aufnahmeöffnung 111A kann in diesem Fall relativ eng bemessen werden.

Nachdem beide Gewindestangen 21A, 21B in die zweiten Öffnungsteile 1112A, 1112B eingeführt wurden, kann die Deckenstütze nur noch mittels einer Manipulation gelöst werden, die praktisch nur der Installateur ausführen kann. Zufällige Krafteinwirkungen vermögen hingegen nicht, die Deckenstütze 1 wieder zu lösen.

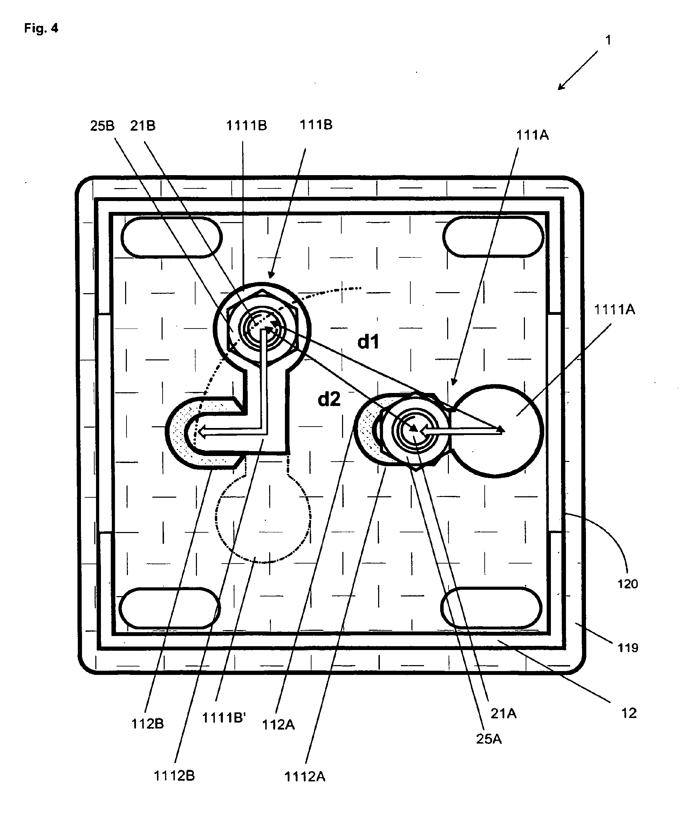

Figur 4 zeigt die Deckenstütze 1 von Figur 3 mit einer vorzugsweise ausgestalteten zweiten Aufnahmeöffnung 111B, deren zweites Öffnungsteil 1112B in einem ersten Abschnitt senkrecht zum zweiten Öffnungsteil 1112A der ersten Aufnahmeöffnung 111A und in einem zweiten Abschnitt parallel, vorzugsweise koaxial dazu verläuft. Dadurch ergeben sich verschiedene Vorteile. Einerseits wird die Montage der Deckenstütze 1 durch das notwendige Einfahren der zweiten Gewindestange 21B in den zweiten Abschnitt kaum erschwert. Hingegen wird ein selbsttätiges Lösen der Deckenstütze 1 auch unter verschiedenen Krafteinwirkungen praktisch verhindert. Ferner können durch diese Maßnahme die Montagepositionen leichter definiert werden. Um die Deckenstütze lösen zu können, sind verschiedene Manipulationen des Installateurs erforderlich, die jedoch einfach ausgeführt werden können.

In Figur 4 ist ferner schematisch gezeigt, dass das zweite Öffnungsteil 1112B jeder Aufnahmeöffnung auch mit zwei oder mehreren ersten Öffnungsteilen 1111B, 1111B' verbunden sein kann. Dies kann hilfreich sein, wenn die Deckenstütze 1 in einem Bereich zu installieren ist, in dem nur wenig Raum für Manipulationen zur Verfügung steht.

In den Figuren 3 und 4 wurden Ausgestaltungen der Deckenstütze 1 gezeigt, bei denen die Installation nur mit wenigstens einer Verschiebung und einer Drehung der Deckenstütze möglich ist.

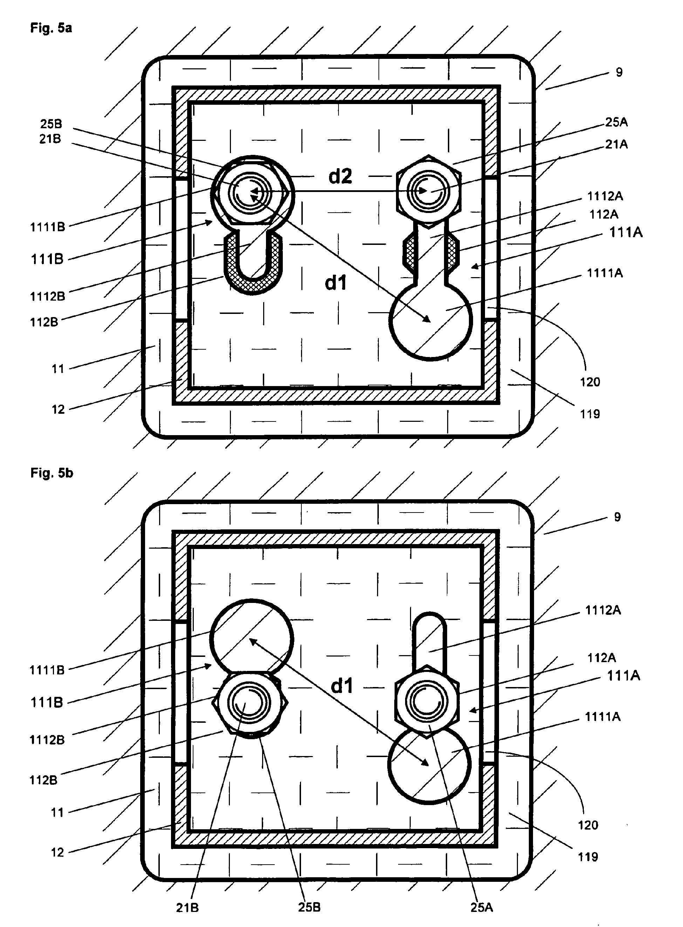

Die Figuren 5a-b zeigen Schnittdarstellungen einer erfindungsgemässen Deckenstütze 1, deren Endstück 11 zwei der Aufnahme von zwei Gewindestangen 21A, 21B dienende Aufnahmeöffnungen 111A, 111B aufweist, deren zweite Öffnungsteile 1112A, 1112B im Abstand d2 der Gewindestangen 21A, 21B parallel zueinander verlaufen. Die beiden Aufnahmeöffnungen 111A, 111B weisen zwischen deren ersten Öffnungsteilen 1111A, 1111B wiederum den maximalen Abstand d1 auf, der grösser ist, als der Abstand d2 zwischen den Gewindestangen 21A, 21B. Es ist daher auch bei dieser Ausgestaltung der Deckenstütze 1 nicht möglich, die Gewindestangen 21A, 21B simultan in die Aufnahmeöffnungen 111A, 111B einzuführen oder aus diesen zu entfernen.

Zur Montage der Deckenstütze 1 muss die mit der ersten Schraubenmutter 25A versehene erste Gewindestange 21A in das erste Öffnungsteil 1111A der ersten Aufnahmeöffnung 111A eingeführt und anschliessend bis ans Ende des zweiten Öffnungsteils 1112A verschoben werden. In dieser Endposition gelingt es, die mit der zweiten Schraubenmutter 25B versehene zweite Gewindestange 21B in das erste Öffnungsteil 1111B der zweiten Aufnahmeöffnung 111B einzuführen und in das zweite Öffnungsteil 1112B zu verschieben. Dadurch wird auch die erste Gewindestange 21A im zweiten Öffnungsteil 1112A der ersten Aufnahmeöffnung 111A soweit zurück verschoben, bis beide Gewindestangen 21A, 21B zu je einer Montageposition gelangen, an der ein der Aufnahme der Schraubenmutter 25A bzw. 25B dienender Sitz 112A bzw. 112B vorgesehen ist. Auch bei dieser Ausgestaltung der Deckenstütze 1 wird zuverlässig verhindert, dass sich diese selbsttätig von den Gewindestangen 21A, 21B lösen kann, da gegenläufige Verschiebungen notwendig sind, die nur vom Installateur einfach ausgeführt werden können.

## Patentansprüche

1. Deckenstütze (1) insbesondere zur Montage einer Kabelführungsvorrichtung (6), mit einem Endstück (11) und einem daran anschliessenden Stützenkörper (12), der mit einem Ausleger verbindbar ist, auf den die zu tragende Last abgelegt werden kann, wobei das Endstück (11) mit wenigstens einer ersten und einer zweiten Gewindestange (21A; 21B) verbindbar ist, die in der Decke (9) verankert sind, **dadurch gekennzeichnet, dass** das Endstück (11) mit wenigstens zwei Aufnahmeöffnungen (111A, 111B) versehen ist, die ein grösseres erstes Öffnungsteil (1111A; 1111B) aufweisen, in die ein an der ersten bzw. zweiten Gewindestange (21A; 21B) drehbar gelagertes Verbindungselement (25A; 25B) einführbar ist, und die ein kleineres zum Halten des Verbindungselements (25A; 25B) geeignetes zweites Öffnungsteil (1112A; 1112B) aufweisen, in das die eingeführte Gewindestange (21A; 21B) verschiebbar ist, wobei der Abstand d1 zwischen den ersten Öffnungsteilen (1111A, 1111B) grösser gewählt ist, als der Abstand d2 zwischen den Gewindestangen (21A, 21B).

2. Deckenstütze (1) nach Anspruch 1, **dadurch gekennzeichnet, dass** die zweiten Öffnungsteile (1112A; 1112B) der beiden Aufnahmeöffnungen (111A, 111B) senkrecht oder schräg zueinander verlaufen.

3. Deckenstütze (1) nach Anspruch 1, **dadurch gekennzeichnet, dass** die zweiten Öffnungsteile (1112A; 1112B) der beiden Aufnahmeöffnungen (111A, 111B) in einem Abstand parallel zueinander verlaufen, der vorzugsweise dem Abstand d2 zwischen den beiden Gewindestangen (21A, 21B) entspricht.

4. Deckenstütze (1) nach Anspruch 2 oder 3, **dadurch gekennzeichnet, dass** das zweite Öffnungsteil (1112A; 1112B) der ersten und/oder zweiten Aufnahmeöffnung (111A, 111B) einen geraden oder verwinkelten Verlauf aufweisen oder dass das zweite Öffnungsteil (1112B) zumindest annähernd entlang der Linie eines Kreises ausgerichtet ist, der um die Montageposition der ersten Gewindestange (21A) in der ersten Aufnahmeöffnung (111A) verläuft.

5. Deckenstütze (1) nach einem der Ansprüche 1-4, **dadurch gekennzeichnet, dass** die beiden Aufnahmeöffnungen (111A, 111B) derart angeordnet sind, dass sich die Verläufe der beiden zweiten Öffnungsteile (1112A; 1112B) ausgehend von den ersten Öffnungsteilen (1111A; 1111B) zumindest zu Beginn stetig annähern.

6. Deckenstütze (1) nach einem der Ansprüche 1-5, **dadurch gekennzeichnet, dass** der an das kleinere zweite Öffnungsteil (1112A; 1112B) anschliessende Rand (112A; 122B) als Flansch für das Verbindungselement (25A; 25B) dient.

7. Deckenstütze (1) nach Anspruch 6, **dadurch gekennzeichnet, dass** die Abmessungen des zweiten Öffnungsteils (1112A; 1112B) entsprechend dem Durchmesser der Gewindestange (21A, 21B) gewählt sind, so dass dieses nach der Montage im zugehörigen zweiten Öffnungsteil (1112A; 1112B) vorzugsweise spielfrei gehalten ist.

8. Deckenstütze (1) nach Anspruch 6 oder 7, **dadurch gekennzeichnet, dass** in den Rand des ersten und/oder zweiten Öffnungsteils (1112A; 1112B) ein Sitz (112A, 112B) und/oder wenigstens ein Widerhaken (115) eingearbeitet ist, mittels dessen das Verbindungselement (25A; 25B) im Öffnungsteil (1112A; 1112B) vorzugsweise in der Montageposition gehalten wird.

9. Deckenstütze (1) nach Anspruch 8, **dadurch gekennzeichnet, dass** der Sitz (112) die Form einer kragenförmigen Vertiefung aufweist, die vorzugsweise derart in das Endstück (11) eingepresst oder eingefräst ist, dass eine kontinuierliche oder sprunghafte Höhenänderung im Bereich des Übergangs zwischen dem grösseren ersten Öffnungsteil (1111A; 1111B) und dem kleineren zweiten Öffnungsteil (1112A; 1112B) resultiert.

10. Deckenstütze (1) nach einem der Ansprüche 1 - 9, **dadurch gekennzeichnet, dass** das Verbindungselement (25) eine Schraubenmutter ist oder dass das Verbindungselement (25) aus einer Schraubenmutter und einer Unterlagsscheibe besteht.

11. Deckenstütze (1) nach einem der Ansprüche 1 - 10, **dadurch gekennzeichnet, dass** die Aufnahmeöffnung (111) zumindest annähernd die Form eines Schlüssellochs aufweist.

12. Deckenstütze (1) nach einem der Ansprüche 1 - 11, **dadurch gekennzeichnet, dass** das Endstück (11) eine vorzugsweise veredelte Metallplatte ist und dass die damit verbundenen Gewindestangen (21A, 21B) Teil von in der Decke (9) verankerten Segmentankern sind.

13. Deckenstütze (1) nach einem der Ansprüche 1 - 12, **dadurch gekennzeichnet, dass** wenigstens eine dritte Aufnahmeöffnung und/oder wenigstens eine Aufnahmeöffnung vorgesehen ist, die wenigstens zwei erste Öffnungsteile (1111) aufweist, die durch ein zweites Öffnungsteil (1112) miteinander verbunden sind.

14. Deckenstütze (1) nach einem der Ansprüche 1 - 13, **dadurch gekennzeichnet, dass** die Deckenstütze (1) mit wenigstens einer ersten und einer zweiten Gewindestange (21A; 21B) verbunden ist, die in der Decke (9) verankert sind.

## Claims

1. Ceiling support (1), particularly for mounting a cable routing device (6), with an end piece (11) and a support body (12), which can be connected with a cantilever, onto which the load that shall be held can be laid, wherein the end piece (11) can be connected to at least a first and a second threaded rod (21A; 21B), which are anchored in the ceiling, **characterised in that** the end piece (11) comprises at least two openings (111A, 111B), that
comprise a larger first opening part (1111A; 1111B), into which a connecting element (25A; 25B) can be inserted that is rotatably mounted on the first or second threaded rod (21A; 21B) respectively, and that
comprise a smaller second opening part (1112A; 1112B), which is designed for holding the connecting element (25A; 25B) and into which the inserted threaded rod (21A; 21B) can be moved,
wherein the distance d1 between the first opening parts (1111A, 1111B) is selected larger than the distance d2 between the threaded rods (21A, 21B).

2. Ceiling support (1) according to claim 1, **characterised in that** the second opening parts (1112A; 1112B) of both openings (111A, 111B) run perpendicularly or inclined to one another.

3. Ceiling support (1) according to claim 1, **characterised in that** the second opening parts (1112A; 1112B) of both openings (111A, 111B) the run parallel to one another in a distance, which preferably corresponds to the distance d2 between both threaded rods (21A, 21B).

4. Ceiling support (1) according to claim 2 or 3, **characterised in that** the second opening part (1112A; 1112B) of the first and/or the second opening (111A, 111B) comprises a straight or angle track or
that the second opening part (1112B) is aligned at least approximately along the line of a circle, which runs around the mounting position of the first threaded rod (21A) in the first opening (111A).

5. Ceiling support (1) according to one of the claims 1-4, **characterised in that** both openings (111A, 111B) are arranged in such a way that the tracks of both opening parts (1112A; 1112B) starting from the first opening parts (1111A; 1111B) gradually approach one another at least initially.

6. Ceiling support (1) according to one of the claims 1-5, **characterised in that** the border (112A; 122B) that joins the smaller second opening part (1112A; 1112B) serves as a flange for the connecting element (25A; 25B).

7. Ceiling support (1) according to claim 6, **characterised in that** that the dimensions of the second opening parts (1112A; 1112B) are selected corresponding to the diameter of the threaded rod (21A, 21B), so that after mounting this is held in the second opening part (1112A; 1112B) preferably without play.

8. Ceiling support (1) according to claim 6 or 7, **characterised in that** a seat (112A, 112B) and/or at least a hook (115) is worked into the border of the first and/or the second opening part (1112A; 1112B), by means of which the connecting element (25A; 25B) is held within the opening part (1112A; 1112B) preferably in the mounting position

9. Ceiling support (1) according to claim 8, **characterised in that** the seat (112) comprises the form of a collar-like recess, which is preferably pressed or cut into the end piece (11) in such a way that a continuous or stepped change in height results in the range of the transition between the larger first opening part (1111A; 1111B) and the smaller second opening part (1112A; 1112B).

10. Ceiling support (1) according to one of the claims 1 - 9, **characterised in that** the connecting element (25) is a screw-nut or that the connecting element (25) consists of a screw-nut and a washer.

11. Ceiling support (1) according to one of the claims 1 - 10, **characterised in that** the opening (111) comprises at least approximately the form of a keyhole.

12. Ceiling support (1) according to one of the claims 1 - 11, **characterised in that** the end piece (11) is a metal plate that preferably has been refined and that the threaded rods (21A, 21B) connected thereto are part of segment anchors that are anchored in the ceiling (9).

13. Ceiling support (1) according to one of the claims 1 - 12, **characterised in that** at least a third opening and/or at least an opening is provided, which comprises at least two first opening parts (1111) that are connected to one another by means of a second opening part (1112).

14. Ceiling support (1) according to one of the claims 1 - 13, **characterised in that** the ceiling support (1) is connected to at least a first and second threaded rod (21A; 21B) that are anchored in the ceiling (9).

## Revendications

1. Etai de plafond (1) en particulier pour le montage d'un dispositif de guidage de câble (6), avec une pièce d'extrémité (11) et un corps d'étai (12) à raccorder, qui peut être relié à une flèche sur laquelle peut être déposée la charge à porter, la pièce d'extrémité pouvant être reliée à au moins une première et une seconde tige filetée (21A; 21B) qui sont ancrées dans le plafond (9) **caractérisé en ce que** la pièce d'extrémité (11) est munie d'au moins deux ouvertures de logement (111A, 111B) qui présentent une première partie d'ouverture plus grande (1111A; 1111B), dans lesquelles peut être inséré un élément de liaison (25A; 25B) logé rotatif sur la première respectivement la seconde tige filetée (21A; 21B) et qui présentent une seconde partie d'ouverture plus petite (1112A; 1112B) appropriée pour le maintien de l'élément de liaison (25A; 25B) dans laquelle peut coulisser la tige filetée insérée (21A; 21B), la distance d1 les premières parties d'ouverture (1111A, 1111B) étant sélectionnée plus grande que la distance d2 entre les tiges filetées (21A, 21B).

2. Etai de plafond (1) selon la revendication 1, **caractérisé en ce que** les secondes parties d'ouverture, (1112A; 1112B) des deux ouvertures de logement (111A, 111B) s'étendent perpendiculairement ou obliquement entre elles.

3. Etai de plafond (1) selon la revendication 1, **caractérisé en ce que** les secondes parties d'ouverture, (1112A; 1112B) des deux ouvertures de logement (111A, 111B) s'étendent parallèlement à une distance entre elles qui correspond de préférence à la distance d2 entre les deux tiges filetées (21A, 21B).

4. Etai de plafond (1) selon la revendication 2 ou 3, **caractérisé en ce que** la seconde partie d'ouverture (1112A; 1112B) de la première et/ou seconde ouverture de logement (111A, 111B) présente un tracé rectiligne ou coudé ou **en ce que** la seconde partie d'ouverture (1112B) est orientée au moins approximativement le long de la ligne d'un cercle qui s'étend autour de la position de montage de la première tige filetée (21A) dans la première ouverture de logement (111A) .

5. Etai de plafond (1) selon l'une des revendications 1 à 4, **caractérisé en ce que** les deux ouvertures de logement (111A, 111B) sont disposées de sorte que les tracés des deux secondes parties ouverture (1112A; 1112B) se rapproche au moins au début constamment en partant des premières parties d'ouverture (1111A; 1111B).

6. Etai de plafond (1) selon l'une des revendications 1 à 5, **caractérisé en ce que** le bord (112A; 122B) se trouvant dans la continuité de la seconde partie d'ouverture plus petite (1112A; 1112B) sert de bride pour l'élément de liaison (25A; 25B).

7. Etai de plafond (1) selon la revendication 6, **caractérisé en ce que** les dimensions de la seconde partie d'ouverture (1112A; 1112B) sont sélectionnées en fonction du diamètre de la tige filetée (21A, 21B) de sorte que celle-ci puissent être maintenue de préférence sans jeu après le montage dans la seconde partie d'ouverture respective (1112A; 1112B).

8. Etai de plafond (1) selon la revendication 6 ou 7, **caractérisé en ce que** dans le bord de la première et/ou de la seconde partie d'ouverture (1112A; 1112B), il est ménagé un siège (112A, 112B) et/ou au moins un contre-crochet (115) au moyen duquel l'élément de liaison (25A; 25B) est maintenu dans la partie d'ouverture (1112A; 1112B) de préférence en position de montage.

9. Etai de plafond (1) selon la revendication 8, **caractérisé en ce que** le siège (112) présente la forme d'un évidement en forme de collerette qui est pressé ou fraisé dans la pièce d'extrémité (11) de sorte qu'il en résulte une modification de hauteur continue ou brusque entre la première partie d'ouverture plus grande (1111A; 1111B) et la seconde partie d'ouverture plus petite (1112A; 1112B).

10. Etai de plafond (1) selon l'une des revendications 1 à 9, **caractérisé en ce que** l'élément de liaison (25) est un écrou ou **en ce que** l'élément de liaison (25) se compose d'un écrou et d'une rondelle.

11. Etai de plafond (1) selon l'une des revendications 1 à 10, **caractérisé en ce que** l'ouverture de logement (111) présente au moins approximativement la forme d'un trou de serrure.

12. Etai de plafond (1) selon l'une des revendications 1 à 11, **caractérisé en ce que** la pièce d'extrémité (11) est une plaque métallique de préférence affinée et **en ce que** les tiges filetées (21A, 21B) qui y sont reliées font partie de segments d'ancrage ancrés dans le plafond (9).

13. Etai de plafond (1) selon l'une des revendications 1 à 12, **caractérisé en ce qu'**il est prévu au moins une troisième ouverture de logement et/ou une ouverture de logement qui présente au moins deux premières parties d'ouverture (1111) reliées entre elles par une seconde partie d'ouverture (1112).

14. Etai de plafond (1) selon l'une des revendications 1 à 13, **caractérisé en ce que** l'étai de plafond (1) est reliée à au moins une première et une seconde tige filetée (21A; 21B) ancrées dans le plafond (9).
